# FASCICULE DE BREVET EUROPEEN

(11) **EP 1 153 849 B1**
(45) Date de publication et mention de la délivrance du brevet: **15.10.2003**
(21) Numéro de dépôt: 01401085.4
(22) Date de dépôt: 26.04.2001
(51) Int. Cl.: B65D 83/14

(54) **Récipient aérosol à double enveloppe et son procédé de fabrication**
Doppelwandiger Aerosolbehälter sowie Verfahren zu seinem Zusammenbau
Double-walled aerosol container and method for manufacturing same

(30) Priorité: 04.05.2000 FR 0005733
(43) Date de publication de la demande: 14.11.2001
(73) Titulaire: Safet, 92390 Villeneuve-la-Garenne (FR)
(72) Inventeur: Trouillard, Philippe, 89210 Brienon (FR)
(74) Mandataire: Habasque, Etienne Joel Jean-François

(56) Documents cités:
- US-A- 5 224 630
- US-A- 6 019 252

## Description

La présente invention concerne un emballage pour la distribution sous forme d'aérosol d'un produit destiné à être contenu dans l'emballage. Un tel emballage est encore appelé "bidon aérosol".

La présente invention concerne également un procédé pour la fabrication de cet emballage.

On a déjà proposé dans l'état de la technique, notamment pour l'industrie pharmaceutique, des bidons contenant un produit actif et un gaz propulseur permettant de distribuer sous forme d'aérosol le produit actif.

On a par ailleurs développé une nouvelle génération de gaz propulseurs compatibles avec les réglementations en cours relatives à la protection de l'environnement.

L'invention a pour but de proposer un bidon aérosol à gaz propulseur susceptible d'être totalement vidangé pour éviter la subsistance de résidus de produit actif dans le bidon lorsque ce dernier est hors d'usage, ce bidon étant le cas échéant facile à recycler.

A cet effet, l'invention a pour objet un emballage selon la revendication 1.

Suivant d'autres caractéristiques de cet emballage :
- l'angle entre l'axe de révolution de la paroi interne et la partie convergente du fond de cette paroi interne est d'environ 50° ;
- le fond de la paroi interne a une forme générale tronconique ;
- les parois interne et externe sont métalliques ;
- les parois interne et externe sont en aluminium ;
- les parois interne et externe sont munies chacune d'une extrémité supérieure ouverte, l'extrémité supérieure de la paroi interne faisant saillie au-dessus de l'extrémité supérieure de la paroi externe ;
- les parois interne et externe sont reliées entre elles par un rétreint convergeant vers l'extrémité supérieure saillante de la paroi interne ;
- l'extrémité supérieure saillante de la paroi interne est munie d'un bord roulé extérieur délimitant une ouverture de l'emballage.

L'invention a également pour objet un procédé selon la revendication 9 concernant la fabrication d'un emballage tel que défini ci-dessus

Suivant une autre caractéristique de ce procédé, on roule extérieurement l'extrémité supérieure saillante de la paroi interne.

L'invention sera mieux comprise à la lecture de la description qui va suivre donnée uniquement à titre d'exemple et faite en se référant aux dessins dans lesquels :
- la figure 1 est une vue en élévation, avec un arrachement en coupe longitudinale, d'un emballage selon l'invention ;
- les figures 2 à 4 sont des vues sensiblement similaires à la figure 1 représentant l'emballage lors de trois étapes successives de fabrication de celui-ci.

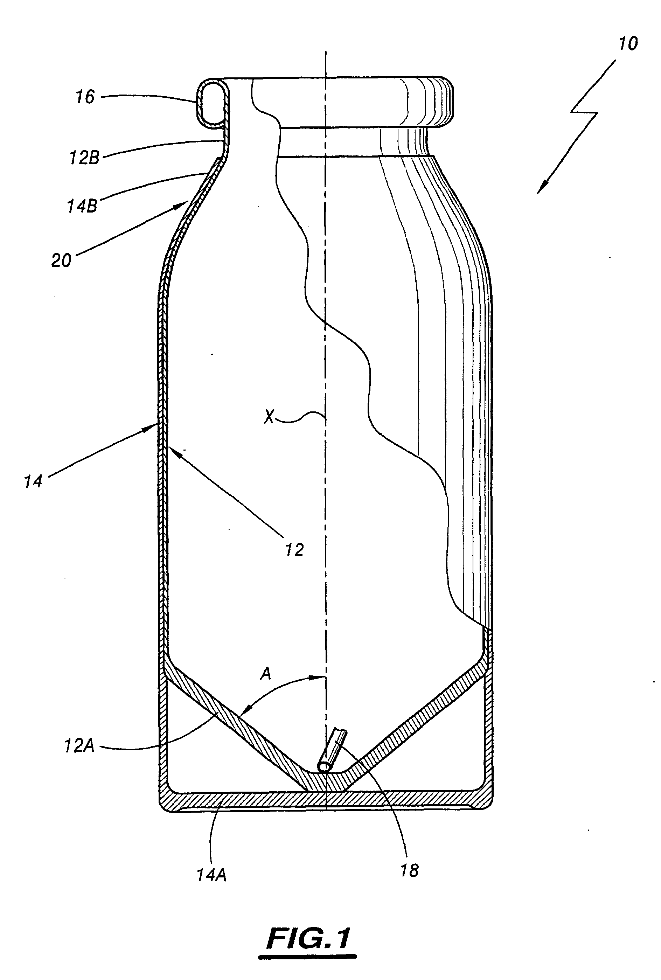

On a représenté sur la figure 1 un emballage 10 selon l'invention destiné à être équipé de moyens classiques de distribution sous forme d'aérosol d'un produit contenu dans cet emballage. Ce produit comporte, d'une part, un produit actif, et d'autre part, un gaz propulseur autorisé par les réglementations en cours concernant la protection de l'environnement.

L'emballage 10 comporte deux parois 12,14 de forme générale de révolution, notamment sensiblement cylindrique, munies chacune d'une extrémité inférieure fermée, formant un fond 12A,14A, et d'une extrémité inférieure ouverte 12B,14B. Les deux parois forment respectivement une paroi interne 12 emboîtée dans la paroi externe 14. L'emballage 10 étant de révolution, son axe X coïncide sensiblement avec celui des parois interne 12 et externe 14.

Dans l'exemple décrit, les parois 12,14 sont métalliques, de préférence en aluminium.

L'extrémité supérieure 12B de la paroi interne fait saillie au-dessus de l'extrémité supérieure 14B de la paroi externe. L'extrémité supérieure saillante 12B de la paroi interne est munie d'un bord roulé extérieur 16 délimitant une ouverture d'accès à l'intérieur de l'emballage.

Les moyens de distribution de produit sont destinés à être agencés de façon connue en soi sur le bord roulé 16 et à l'intérieur de l'emballage 10. Ces moyens de distribution comprennent habituellement un conduit d'aspiration 18 muni d'une extrémité d'aspiration débouchant à proximité immédiate du fond 12A de la paroi interne 12.

Les extrémités supérieures 12B,14B des parois sont reliées entre elles par un rétreint 20 convergeant vers l'extrémité supérieure saillante 12B de la paroi interne. Le fond 14A de la paroi externe et le rétreint 20 forment des moyens d'immobilisation axiale de la paroi interne 12 dans la paroi externe 14.

Le fond 12A de la paroi interne a une forme générale conique de révolution convergeant vers le fond 14A de la paroi externe. De préférence, l'angle A entre l'axe X et la partie convergente du fond 12A de la paroi interne est d'environ 50°. De préférence également le fond 12A de la paroi interne a une forme générale de tronc de cône à bases parallèles, le conduit d'aspiration 18 débouchant à proximité immédiate de la partie du fond 12A délimitant la petite base du tronc de cône.

La convergence du fond 12A de la paroi interne permet l'écoulement des résidus de produit contenu dans l'emballage vers la partie la plus basse du fond 12A à la surface de laquelle débouche le conduit d'aspiration 18.

On a également observé que la forme convergente du fond 12A de la paroi interne optimise l'effet venturi qui, selon le fonctionnement classique des moyens de distribution de produit, permet la circulation de ce produit depuis l'extrémité d'aspiration du conduit 18 représentée sur la figure 1 jusqu'à l'extérieur de l'emballage.

La forme convergente du fond 12A de la paroi interne permet donc de vidanger totalement, ou quasi totalement, les résidus de produit contenu dans l'emballage. Par ailleurs, cet emballage, totalement métallique, peut être facilement recyclé.

On notera que le fond 14A de la paroi externe a une forme générale de disque d'axe X. La surface externe du fond 14A forme ainsi une embase plane stable de l'emballage permettant le stockage de cet emballage en position verticale.

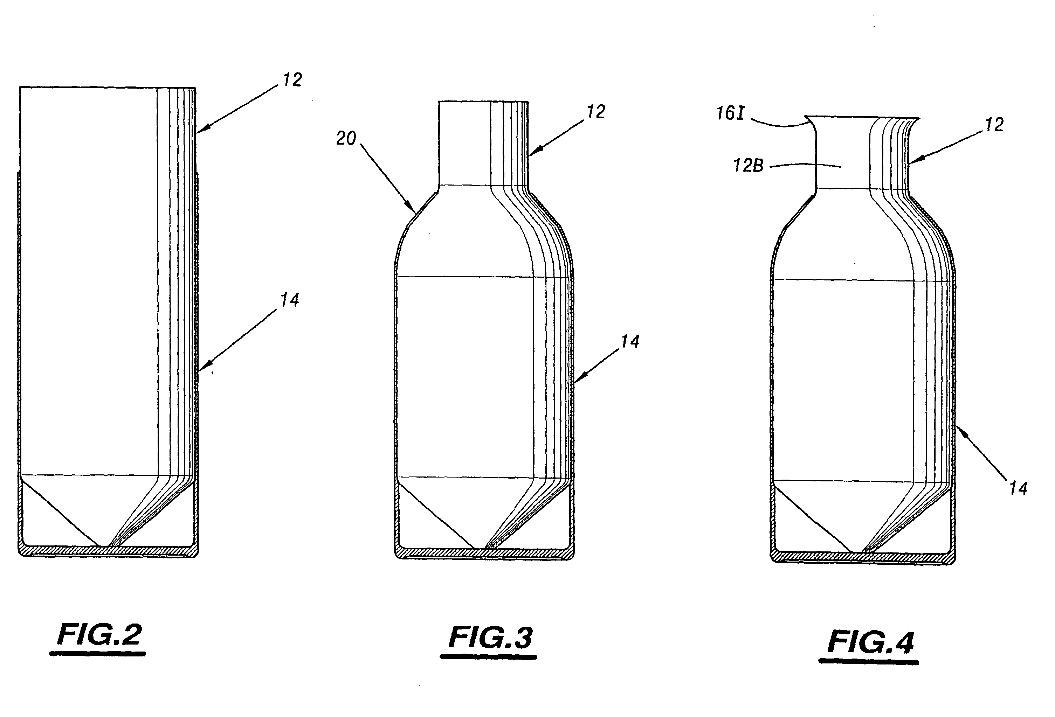

On décrira ci-dessous un procédé de fabrication de l'emballage 10 en se référant aux figures 2 à 4.

Initialement, on forme séparément les deux parois de révolution emboîtables 12,14 à l'aide d'un procédé et de moyens connus, par exemple par filage.

Ensuite, on emboîte la paroi interne 12 dans la paroi externe 14 de manière que l'extrémité supérieure 12B de la paroi interne fasse saillie au-dessus de l'extrémité supérieure 14B de la paroi externe, comme cela est représenté sur la figure 2.

Puis, on forme le rétreint de jonction 20 à l'aide de moyens classiques, comme cela est représenté sur la figure 3.

L'extrémité supérieure saillante 12B de la paroi interne 12 est ensuite roulée vers l'extérieur à l'aide de moyens classiques comportant différents outils de conformation de manière à obtenir un bord roulé intermédiaire 16I, tel que représenté sur la figure 4, puis un bord roulé final 16 tel que représenté sur la figure 1.

L'invention ne se limite pas au mode de réalisation décrit précédemment. En particulier, la paroi interne 12 peut être métallique et la paroi externe 14 peut être en plastique, bien que cela complique le recyclage éventuel de l'emballage. Par ailleurs, les parois interne et externe peuvent être fabriquées dans des métaux variés, notamment des alliages à base d'aluminium.

## Revendications

1. Emballage destiné à être équipé de moyens de distribution sous forme d'aérosol d'un produit contenu dans l'emballage, **caractérisé en ce qu'**il comporte deux parois (12,14) de révolution, emboîtées l'une dans l'autre, munies chacune d'une extrémité inférieure fermée formant un fond (12A,14A), le fond (12A) de la paroi interne ayant une forme générale conique de révolution convergeant vers le fond (14A) de la paroi externe et le fond (14A) de la paroi externe formant une embase plane stable de l'emballage.

2. Emballage selon la revendication 1, **caractérisé en ce que** l'angle (A) entre l'axe de révolution (X) de la paroi interne (12) et la partie convergente du fond (12A) de cette paroi interne est d'environ 50°.

3. Emballage selon la revendication 1 ou 2, **caractérisé en ce que** le fond (12A) de la paroi interne a une forme générale tronconique.

4. Emballage selon l'une quelconque des revendications précédentes, **caractérisé en ce que** les parois interne (12) et externe (14) sont métalliques.

5. Emballage selon la revendication 4, **caractérisé en ce que** les parois interne (12) et externe (14) sont en aluminium.

6. Emballage selon l'une quelconque des revendications précédentes, **caractérisé en ce que** les parois interne (12) et externe (14) sont munies chacune d'une extrémité supérieure ouverte (12B,14B), l'extrémité supérieure (12B) de la paroi interne faisant saillie au-dessus de l'extrémité supérieure (14B) de la paroi externe.

7. Emballage selon les revendications 4 et 6 prises ensemble, **caractérisé en ce que** les parois interne (12) et externe (14) sont reliées entre elles par un rétreint convergeant vers l'extrémité supérieure saillante (12B) de la paroi interne.

8. Emballage selon la revendication 7, **caractérisé en ce que** l'extrémité supérieure saillante (12B) de la paroi interne est munie d'un bord roulé extérieur (16) délimitant une ouverture de l'emballage.

9. Procédé de fabrication d'un emballage selon la revendication 7, **caractérisé en ce que**:
- on forme deux éléments emboîtables l'un dans l'autre délimités chacun par une paroi (12,14) de révolution munie d'une extrémité inférieure fermée (12B,14B),
- on emboîte les deux éléments l'un dans l'autre de manière que l'extrémité supérieure (12B) de la paroi interne fasse saillie au-dessus de l'extrémité supérieure (14B) de la paroi externe, le fond (12A) de la paroi interne ayant une forme générale conique de révolution convergeant vers le fond (14A) de la paroi externe, qui forme une embase plane stable de l'emballage, et
- on forme un rétreint de jonction des parois interne (12) et externe (14) convergeant vers l'extrémité supérieure saillante (12B) de la paroi interne.

10. Procédé selon la revendication 9, **caractérisé en ce que** l'on roule extérieurement l'extrémité supérieure saillante (12B) de la paroi interne.

## Patentansprüche

1. Verpackung, die dazu bestimmt ist, mit Verteilungseinrichtungen in Form eines Aerosols für ein Produkt versehen zu werden, das in der Verpackung enthalten ist, **gekennzeichnet durch** zwei rotationssymmetrische Wände (12, 14), die ineinander geschachtelt sind und jeweils ein unteres geschlossenes Ende aufweisen, das einen Boden (12A, 14A) bildet, wobei der Boden (12A) der inneren Wand die Form im Wesentlichen eines Rotationskegels hat, der zum Boden (14A) der äußeren Wand hin zusammenläuft, und der Boden (14A) der äußeren Wand einen stabilen ebenen Fuß der Verpackung bildet.

2. Verpackung nach Anspruch 1, **dadurch gekennzeichnet, dass** der Winkel (A) zwischen der Rotationsachse (X) der Innenwand (12) und dem zusammenlaufenden Teil des Bodens (12A) dieser Innenwand bei etwa 50° liegt.

3. Verpackung nach Anspruch 1 oder 2, **dadurch gekennzeichnet, dass** der Boden (12A) der Innenwand die Form im Wesentlichen eines Kegelstumpfes hat.

4. Verpackung nach einem der vorhergehenden Ansprüche, **dadurch gekennzeichnet, dass** die Innenwand (12) und die Außenwand (14) metallische Wände sind.

5. Verpackung nach Anspruch 4, **dadurch gekennzeichnet, dass** die Innenwand (12) und die Außenwand (14) aus Aluminium gebildet sind.

6. Verpackung nach einem der vorhergehenden Ansprüche, **dadurch gekennzeichnet, dass** die Innenwand (12) und die Außenwand (14) jeweils mit einem oberen offenen Ende (12B, 14B) versehen sind, wobei das obere Ende (12B) der Innenwand über das obere Ende (14B) der Außenwand vorsteht.

7. Verpackung nach Anspruch 4 und 6 6 gemeinsam genommen, **dadurch gekennzeichnet, dass** die Innenwand (12) und die Außenwand (14) miteinander über eine Einschnürung verbunden sind, die zum oberen vorstehenden Ende (12B) der Innenwand zusammenläuft.

8. Verpackung nach Anspruch 7, **dadurch gekennzeichnet, dass** das vorstehende obere Ende (12B) der Innenwand mit einem nach außen umgebogenen Rand (16) versehen ist, der eine Öffnung der Verpackung begrenzt.

9. Verfahren zum Herstellen einer Verpackung nach Anspruch 7, **dadurch gekennzeichnet, dass**
- zwei ineinander schachtelbare Bauteile gebildet werden, die jeweils von einer rotationssymmetrischen Wand (12, 14) begrenzt sind, die mit einem unteren geschlossenen Ende (12B, 14B) versehen ist,
- die beiden Bauelemente derart ineinander geschachtelt werden, dass das obere Ende (12B) der inneren Wand über das obere Ende (14B) der äußeren Wand vorsteht, wobei der Boden (12A) der inneren Wand eine Form im Wesentlichen eines Rotationskegels hat, der zum Boden (14A) der äußeren Wand zusammenläuft, der einen ebenen stabilen Fuß der Verpackung bildet, und
- eine Verbindungseinschnürung der Innenwand (12) und der Außenwand (14) gebildet wird, die zum oberen vorstehenden Ende (12B) der Innenwand zusammenläuft.

10. Verfahren nach Anspruch 9, **dadurch gekennzeichnet, dass** das obere vorstehende Ende (12B) der Innenwand nach außen umgebogen wird.

## Claims

1. Packaging, designed to be fitted with means, in the form of an aerosol, for dispensing a product contained in the packaging, **characterised in that** it has two walls (12, 14) that are cylindrical in revolution, nested one inside the other, each having a closed bottom end forming a base (12A, 14A), the base (12A) of the inner wall having a generically conical shape in revolution converging towards the base (14A) of the outer wall whilst the base (14A) of the outer wall forms a flat, stable base of the packaging.

2. Packaging as claimed in claim 1, **characterised in that** the angle (A) between the axis of revolution (X) of the inner wall (12) and the convergent part of the base (12A) of this wall is approximately 50°.

3. Packaging as claimed in claim 1 or 2, **characterised in that** the base (12A) of the inner wall has the general shape of a truncated cone.

4. Packaging as claimed in one of the preceding claims, **characterised in that** the inner (12) and outer (14) walls are metal.

5. Packaging as claimed in claim 4, **characterised in that** the inner (12) and outer (14) walls are made from aluminium.

6. Packaging as claimed in any one of the preceding claims, **characterised in that** the inner (12) and outer (14) walls each have a top open end (12B, 14B) and the top end (12B) of the inner wall projects beyond the top end (14B) of the outer wall.

7. Packaging as claimed in claims 4 and 6, **characterised in that** the inner (12) and outer (14) walls are linked to one another by a neck converging towards the projecting top end (12B) of the inner wall.

8. Packaging as claimed in claim 7, **characterised in that** the top projecting end (12B) of the inner wall has an outer rolled-over edge (16) bounding an opening of the packaging.

9. Method of manufacturing a packaging as claimed in claim 7, **characterised in that**:
- two elements are produced which can be nested one inside the other, each bounded by a wall (12, 14) that is cylindrical in revolution with a closed bottom end (12B, 14B),
- the two elements are nested one inside the other so that the top end (12B) of the inner wall projects beyond the top (14B) end of the outer wall,
- the base (12A) of the inner wall has a generally conical shape in revolution, converging towards the bottom (14A) of the outer wall, which forms a flat, stable base of the packaging, and
- the inner (12) and outer (14) walls converging towards the top projecting end (12B) of the inner wall are joined to form a neck.

10. Method as claimed in claim 9, **characterised in that** the top projecting end (12B) of the inner wall is rolled over towards the exterior.
